(19) Europäisches Patentamt
European Patent Office
Office européen des brevets

(11) Numéro de publication : **0 406 064 B1**

(12) **FASCICULE DE BREVET EUROPEEN**

(45) Date de publication du fascicule du brevet :
**07.10.92 Bulletin 92/41**

(51) Int. Cl.⁵ : **F16B 11/00**

(21) Numéro de dépôt : **90401732.4**

(22) Date de dépôt : **19.06.90**

(54) **Procédé d'assemblage de deux éléments tels que des panneaux et assemblage de ces deux éléments.**

(30) Priorité : **28.06.89 FR 8908637**

(43) Date de publication de la demande :
**02.01.91 Bulletin 91/01**

(45) Mention de la délivrance du brevet :
**07.10.92 Bulletin 92/41**

(84) Etats contractants désignés :
**DE ES GB IT SE**

(56) Documents cités :
**EP-A- 0 141 065**
**EP-A- 0 236 925**
**DE-A- 3 123 179**
**DE-B- 1 252 975**

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Bertolini, Carlo**
**192 Boulevard Voltaire**
**F-75011 Paris (FR)**
Inventeur : **Cardine, Patrice**
**1 Rue René Barthélémy**
**F-45100 Orleans (FR)**

(74) Mandataire : **Martin, Jean-Paul et al**
**c/o CABINET LAVOIX 2, Place d'Estienne d'Orves**
**F-75441 Paris Cedex 09 (FR)**

## Description

La présente invention a pour objet un procédé d'assemblage de deux éléments, tels que des panneaux susceptibles de former une peau extérieure et une peau intérieure d'une porte de véhicule.

Actuellement, sur une porte métallique, la liaison entre la peau extérieure et la peau intérieure d'une porte est assurée par le sertissage de la première sur la seconde; l'étanchéité est assurée par un cordon de mastic ou de colle (un tel assemblage est par example connu du document DE-A-3123179).

Sur une porte plastique, la liaison entre les deux panneaux est réalisée par collage. Dans les deux cas la séparation de la peau extérieure n'est pas réalisable sans détérioration de la porte.

Conformément au procédé visé par l'invention, on perce un certain nombre de trous de vis dans le premier élément, on dépose une couche de produit anti-adhésif sur la surface du premier élément, on place contre l'une des faces de cet élément des plaques perforées en regard des trous précités, on fixe les plaques audit premier élément par des vis, on dépose sur la face du second élément tournée vers le premier élément une couche ou un cordon de colle, et on effectue l'assemblage des deux éléments par collage, le premier élément pouvant ensuite être démonté et remonté par dévissage et revissage.

Le remontage du premier élément, qui peut être par exemple un panneau intérieur de porte de véhicule, se fait aisément, car sa position a été prédéterminée par le collage des plaques sur le second élément.

Dans le cas d'une porte de véhicule, cet agencement présente l'avantage résidant dans le fait qu'il permet d'obtenir une liaison rapide et démontable entre deux panneaux de porte, plastique par exemple.

L'assemblage de deux éléments tels que des panneaux selon ce procédé est caractérisé en ce que le premier élément est pourvu sur l'une de ses faces de plaques fixées à l'élément par des vis, la surface de cet élément entourant les plaques est revêtue d'un produit anti-adhésif, la face du second élément tournée vers le premier élément est enduite d'un cordon de colle en regard des plaques qui assure une liaison entre les deux éléments, lesquels peuvent ensuite être séparés par dévissage.

L'invention sera maintenant décrite en référence à une forme de réalisation illustrée aux dessins à titre d'exemple non limitatif.

La figure 1 est une vue en perspective partielle éclatée de deux éléments constitués par des panneaux susceptibles d'être assemblés conformément au procédé visé par l'invention.

La figure 2 est une vue en coupe partielle du premier panneau pourvu de plaques et de vis de l'assemblage selon l'invention.

La figure 3 est une vue en coupe partielle du second élément constitué par un panneau complémentaire du panneau de la Fig.2.

La figure 4 est une vue en coupe partielle de l'assemblage des deux éléments des Fig.2 et 3.

La figure 5 est une vue en perspective éclatée d'une porte de véhicule à laquelle est appliquée l'invention.

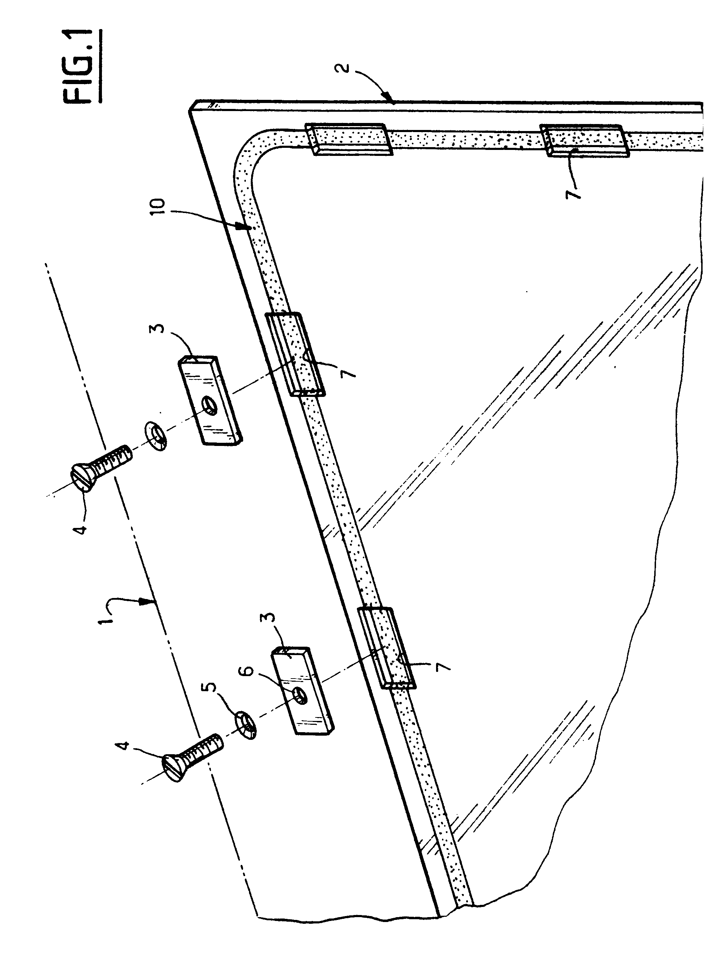

On voit à la Fig.1 deux éléments 1, 2 constitués par des panneaux à assembler : le premier panneau 1 est pourvu sur l'une de ses faces, à savoir sa face tournée vers le second panneau 2, d'une série de plaques 3, par exemple en acier. Ces plaques 3 sont fixées au panneau 1 par des vis respectives 4 pouvant traverser des trous 5, 6 taraudés correspondants, ménagés respectivement dans le panneau 1 et dans chaque plaque 3, ces dernières étant réparties à intervalles réguliers sur le pourtour du panneau 1 dont elles font saillie. Les plaques 3 sont partiellement logées dans des dégagements 9 de l'élément 1, dont elles font également partiellement saillie vers le panneau 2.

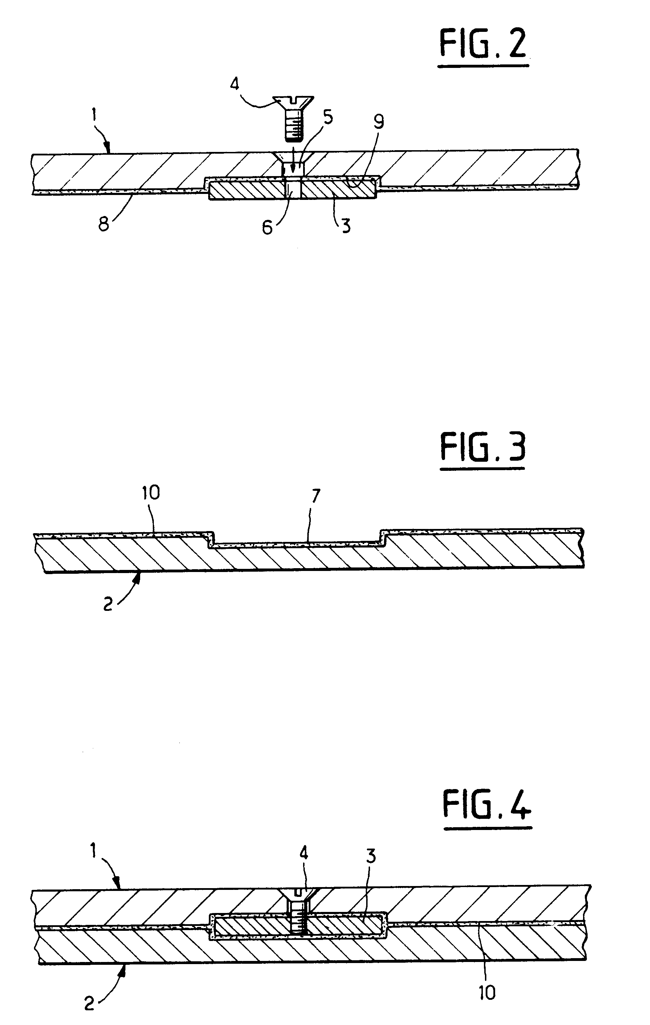

Le second panneau 2 présente au voisinage de sa périphérie des évidements 7 adaptés pour recevoir les plaques 3 du panneau 1 et de dimensions légèrement supérieures à celles des plaques 3, compte tenu des tolérances de positionnement entre les deux panneaux. La surface du panneau 1 est revêtue d'un produit anti-adhésif 8 (Fig.2) tandis qu'un cordon de colle 10 est déposé sur la face intérieure du second panneau 2 sur une partie au moins de sa périphérie, dans les évidements 7 et entre ceux-ci. Ce cordon 10 s'étend en regard d'un cordon correspondant constitué par le produit anti-adhérent 8.

Pour assembler les deux panneaux 1 et 2, on procède comme suit :

– tout d'abord, on dépose le cordon 8 de produit anti-adhérent sur la face du panneau 1 tournée vers le panneau 2,

– on fixe les plaques perforées 3 sur la face du panneau 1 tournée vers le panneau 2, grâce aux vis 4 vissées dans les trous correspondants 5, 6 (Fig.2).

– on dépose sur la face du second panneau 2 tournée vers le panneau 1 une couche de colle constituée par exemple par le cordon 10, puis on applique le premier panneau 1 contre le second panneau 2, de manière à loger les plaques 3 dans les évidements 7. Les plaques 3 et le panneau 1 sont alors fixés au panneau 2 par la couche de colle 10, tandis qu'entre les plaques 3 le produit anti-adhésif 8 empêche le cordon de colle 10 d'exercer son effet. Les deux panneaux 1 et 2 sont donc fermement assemblés l'un à l'autre par collage au niveau des logements 7 des plaques 3. De plus, l'étanchéité entre les panneaux 1, 2 est assurée par le cordon de colle 10.

Pour démonter le premier panneau 1, il suffit alors de dévisser les vis 4, les plaques 3 restant solidarisées par collage avec le panneau 2. Le remontage du panneau 1 se fait sans difficulté par revissage des vis 4 dans leurs trous correspondants 5, 6.

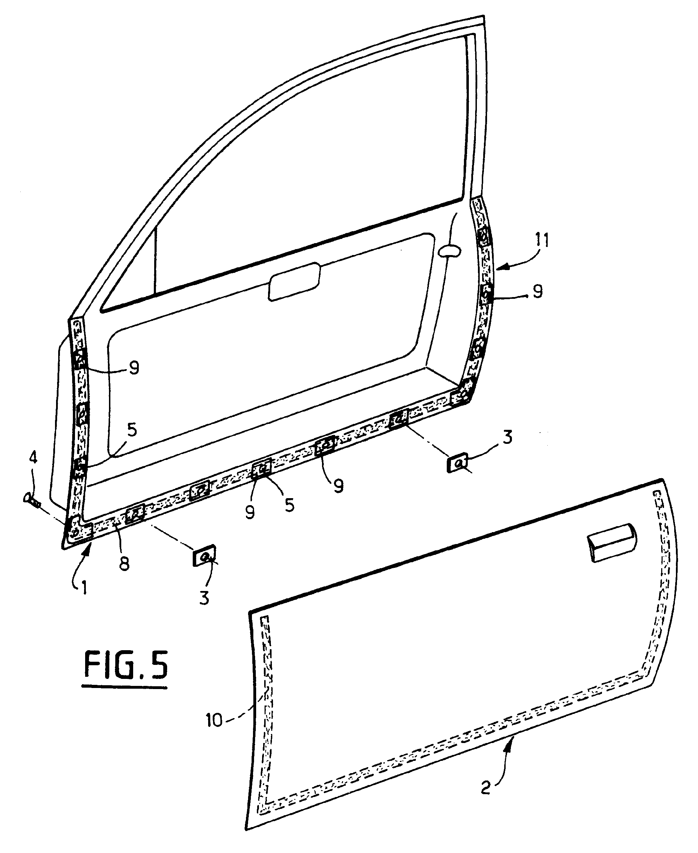

Les panneaux 1 et 2 peuvent être métalliques ou en matière plastique, et constitués par exemple d'une peau extérieure 2 et une peau intérieure 1 d'une porte 11 de véhicule, comme représenté à la Fig.5. On notera qu'après démontage de la peau extérieure 2, on retrouve aisément et automatiquement la position initiale exacte grâce aux plaques 3 restées solidaires de la peau extérieure 2.

En variante, les évidements 7 et dégagements 9 peuvent être remplacés, soit uniquement par les évidements 7, soit uniquement par les dégagements 9, la face du panneau opposé étant alors plane.

## Revendications

1. Procédé d'assemblage de deux éléments, tels que des panneaux (1, 2), caractérisé en ce qu'on perce un certain nombre de trous (5) de vis (4) dans le premier élément (1), on dépose une couche de produit anti-adhésif (8) sur la surface du premier élément (1), on place contre l'une des faces de cet élément (1) des plaques (3) perforées en regard des trous précités, on fixe les plaques (3) audit premier élément (1) par des vis (4), on dépose sur la face du second élément (2) tournée vers le premier élément (1) une couche ou un cordon de colle (10), et on effectue l'assemblage des deux éléments par collage, le premier élément pouvant ensuite être démonté et remonté par dévissage et revissage.

2. Assemblage de deux éléments (1, 2) tels que des panneaux selon le procédé conforme à la revendication 1, caractérisé en ce que le premier élément est pourvu sur l'une de ses faces de plaques (3) fixées à l'élément par des vis (4), la surface de cet élément (1) entourant les plaques est revêtue d'un produit anti-adhésif (8), la face du second élément (2) tournée vers le premier élément (1) est enduite d'un cordon de colle (10) en regard des plaques (3) qui assure une liaison entre les deux éléments (1, 2), lesquels peuvent ensuite être séparés par dévissage.

3. Assemblage selon la revendication 2, caractérisé en ce que les plaques (3) font saillie partiellement de la face du premier élément (1), et des évidements (7) complémentaires des plaques (3), sont formés sur la face du second élément (2) pour recevoir lesdites plaques (3).

4. Assemblage selon l'une des revendications 2 et 3, caractérisé en ce que le cordon de colle (10) s'étend sur une partie au moins de la périphérie du second élément (2) de manière à assurer une étanchéité avec le premier élément (1).

5. Assemblage selon l'une des revendications 2 à 4, caractérisé en ce que les éléments (1, 2) sont des panneaux formant une peau extérieure (2) et une peau intérieure (1) d'une porte de véhicule.

## Patentansprüche

1. Verfahren zum Verbinden von zwei Elementen, wie zum Beispiel Platten (1, 2), **dadurch gekennzeichnet, daß** eine gewisse Anzahl von Löchern (5) für die Aufnahme von Schrauben (4) in das erste Element (1) gebohrt wird, daß eine Schicht Antihaftprodukt (8) auf die Oberfläche des ersten Elementes (1) aufgetragen wird, daß gegen eine der Flächen dieses Elementes (1) Platten (3) gelegt werden, die gegenüber den vorgenannten Löchern gebohrt sind, daß die Platten (3) an dem ersten Element (1) mittels Schrauben (4) befestigt werden, daß auf der dem ersten Element (1) zugekehrten Seite des zweiten Elementes (2) eine Schicht oder ein Wulst aus Klebstoff (10) aufgetragen wird und daß die beiden Elemente durch Verkleben zusammengefügt werden, wonach das erste Element anschließend durch Lösen und Wiederfestziehen der Schrauben ausgebaut und wieder eingebaut werden kann.

2. Verbindung von zwei Elementen (1, 2), wie zum Beispiel Paneelen, nach dem Verfahren von Anspruch 1, **dadurch gekennzeichnet, daß** das erste Element auf einer seiner Flächen mit Platten (3) versehen ist, die mittels Schrauben (4) an dem Element befestigt sind, und daß die die Platten umgebende Fläche des Elementes (1) mit einem Antihaftprodukt (8) bestrichen ist und daß die gegen das erste Element (1) gekehrte Fläche des zweiten Elementes (2) gegenüber den Platten (3) mit einem Klebstoffwulst (10) versehen ist, welcher die Verbindung zwischen den beiden Elementen (1, 2) gewährleistet, die anschließend durch Lösen der Schrauben voneinander getrennt werden können.

3. Verbindung nach Anspruch 2, **dadurch gekennzeichnet, daß** die Platten (3) teilweise aus der Fläche des ersten Elementes (1) herausragen und daß den Platten (3) komplementäre Vertiefungen (7) auf der Fläche des zweiten Elementes (2) ausgebildet sind, um diese Platten (3) aufzunehmen.

4. Verbindung nach einem der Ansprüche 2 und 3, **dadurch gekennzeichnet, daß** sich der Klebstoffwulst (10) über mindestens einen Teil des Umfangs des zweiten Elementes (2) erstreckt, um die Abdichtung mit dem ersten Element (1) zu gewährleisten.

5. Verbindung nach einem der Ansprüche 2 bis 4, **dadurch gekennzeichnet, daß** die Elemente (1, 2) Paneele sind, die eine Außenhaut (2) und eine Innenhaut (1) einer Fahrzeugtür bilden.

**Claims**

1. Process for assembling two elements, such as panels (1, 2), characterised in that a certain number of holes (5) for screws (4) are drilled in the first element (1), a layer of anti-adhesive agent (8) is deposited on the surface of the first element (1), drilled plates (3) are placed against one of the faces of this element (1), opposite the abovementioned holes, the plates (3) are fixed to the said first element (1) by screws (4), a layer or strip of adhesive (10) is deposited on the face of the second element (2) which is turned towards the first element (1) and the assembly of the two elements is effected by adhesive bonding, the first element then being removable and remountable by unscrewing and screwing up again.

2. Assembly of two elements (1, 2) such as panels according to the process in accordance with Claim 1, characterised in that the first element is provided on one of its faces with plates (3) fixed to the element by screws (4), the surface of this element (1) surrounding the plates is coated with an anti-adhesive agent (8), the face of the second element (2) which is turned towards the first element (1) is coated with a strip of adhesive (10) facing the plates (3), which ensures a connection between the two elements (1, 2), which can then be separated by unscrewing.

3. Assembly according to Claim 2, characterised in that the plates (3) partially protrude from the face of the first element (1), and recesses (7), complementary to the plates (3), are formed on the face of the second element (2) to receive the said plates (3).

4. Assembly according to either of Claims 2 and 3, characterised in that the strip of adhesive (10) extends over at least part of the periphery of the second element (2) in such a way as to ensure leakproofness with respect to the first element.

5. Assembly according to one of Claims 2 to 4, characterised in that the elements (1, 2) are panels forming an outer skin (2) and an inner skin (1) of a vehicle door.

FIG.1

## FIG. 2

## FIG. 3

## FIG. 4

**FIG.5**